(19) Europäisches Patentamt
European Patent Office
Office européen des brevets

(11) **EP 1 795 915 A2**

(12) **EUROPEAN PATENT APPLICATION**

(43) Date of publication:
**13.06.2007 Bulletin 2007/24**

(51) Int Cl.:
**G01S 13/76** (2006.01)

(21) Application number: **06251206.6**

(22) Date of filing: **07.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.12.2005 JP 2005352584**

(71) Applicant: **Fujitsu Ltd.**
**Kawasaki-shi, Kanagawa 211-8588 (JP)**

(72) Inventors:
• **Maniwa, Toru c/o Fujitsu Limited**
**Kawasaki-shi, Kanagawa 211-8588 (JP)**
• **Kimura, Shigekazu c/o Fujitsu Limited**
**Kawasaki-shi, Kanagawa 211-8588 (JP)**

(74) Representative: **Stebbing, Timothy Charles et al**
**Haseltine Lake**
**Lincoln House**
**300 High Holborn**
**London WC1V 7JH (GB)**

(54) **Position locator for locating position of radio tag**

(57) An antenna (101, 604, 607, 801) having directivity receives a harmonic signal generated from a radio tag (104, 602). Position information corresponding to a particular direction, and reception information indicating whether or not a harmonic signal was received from that direction are output, for each of a range of directions to which the antenna is directed.

FIG. 2

EP 1 795 915 A2

**Description**

The present invention relates to an RFID system for locating or recognizing items using an RFID (Radio Frequency Identification) tag.

The RFID tag is an electronic device which includes a storage unit for storing data and an antenna for conducting a radio communication, and in which the data can be read and written in a contactless manner. By using this kind of device attached to an item, it is possible to manage the item in a contactless manner.

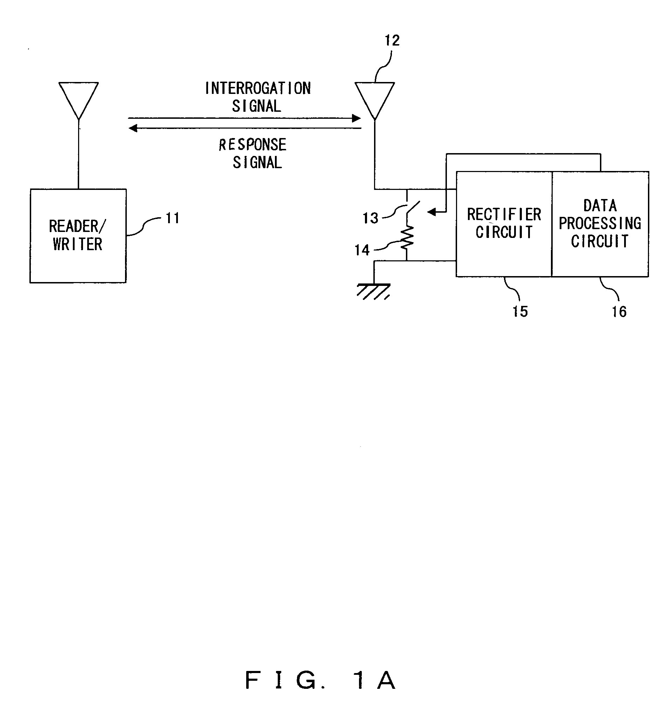

As shown in Fig. 1A, a conventional RFID tag comprises an antenna 12, a switch 13, a resistor 14, a rectifier circuit 15 and a data processing circuit 16, and receives an unmodulated continuous wave as an interrogation signal from a reader/writer 11 of 953MHz, for example. Upon this, the rectifier circuit 15 generates a power supply voltage from the received continuous wave, and supplies the power to the data processing circuit 16.

The switch 13 and the resistor 14 form a variable load circuit. The data processing circuit 16 varies a load on the tag by turning on/off the switch 13, and creates a response signal. Then, the antenna 12 returns the response signal to the reader/writer 11 at the same frequency at which the corresponding interrogation signal was received.

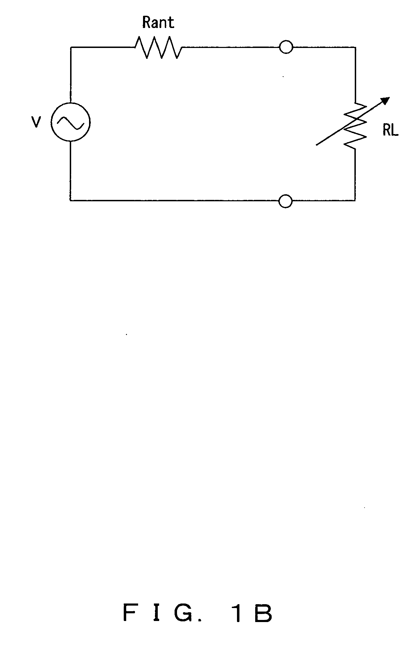

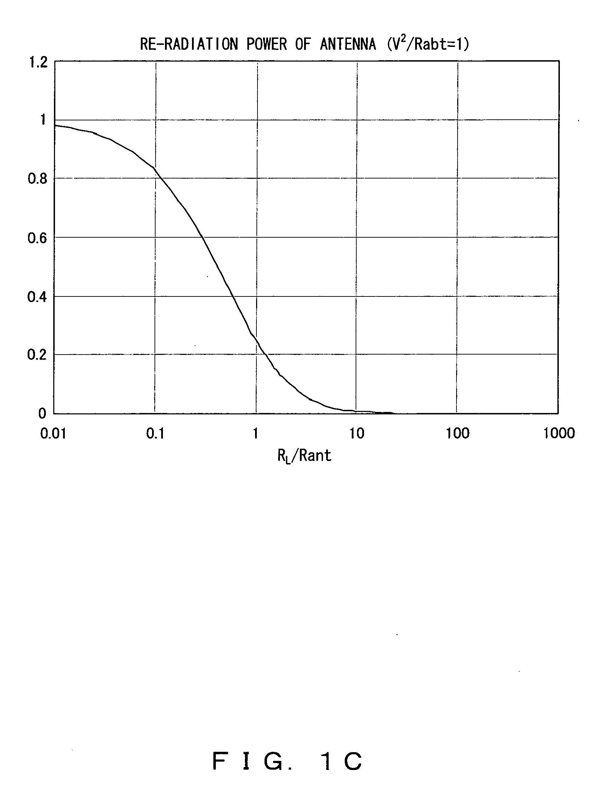

The equivalent circuit of this RFID tag is shown in Fig. 1B. Symbols V, Rant and $R_L$ denote an open voltage of the antenna, a radiation resistance of the antenna and a load of the tag respectively. In this circuit, as the ratio of $R_L$ to Rant changes, the re-radiation power of the antenna ($V^2$/Rant) changes as shown in Fig. 1C.

Upon the reception of the interrogation signal and the transmission of data of the logic "0", the switch 13 remains in the "off" state, and generally, the ratio is set such that $R_L$/Rant = 1 is satisfied. Upon the transmission of data of the logic "1", the switch is turned on. Thereby, the resistor 14 is connected to the tag circuit in parallel, accordingly, $R_L$ is reduced and the value of $R_L$/Rant is also reduced (for example, $R_L$/Rant = 0.5). Accordingly, in accordance with the re-radiation characteristic of Fig. 1C, the re-radiation power of the antenna increases, and electro-magnetic waves are transmitted with large electric power.

As above, the RFID tag returns the response signal to the reader/writer 11 after changing the magnitude of the re-radiation of the antenna 12 by varying the load of the tag.

Regarding the RFID system as above, a method of preventing radio interference among the reader/writers which are located closely to each other by using harmonic waves is proposed (see the Patent Document 1 below, for example). Also, a method of locating a position of a tag by optically detecting a light reflector provided on a surface of an RFID tag is proposed (see the Patent Document 2 below, for example).

Patent Document 1
Japanese Patent Application Publication No. 08-227468

Patent Document 2
Japanese Patent Application Publication No. 04-089296

However, the above conventional RFID system has problems as described below.

When there are a plurality of RFID tags, it is difficult to locate the positions of the tags, although it is possible to recognize the existences of the tags based on the response signals received by the reader/writer. Further, it is not possible to recognize existences of items to which the tags are not attached or items whose tags have a failure.

In order to locate a position of an RFID tag based on a response signal returned from the RFID tag at a particular frequency, it is necessary to construct an antenna having a very narrow beam (directionality) at the frequency used when receiving the response signal. For example, in an RFID system of 953MHz, the wavelength is about 31 cm. Accordingly, an array antenna is required, in which a plurality of antenna elements are arrayed at spatial intervals equal to or longer than an integral multiple of the wavelength.

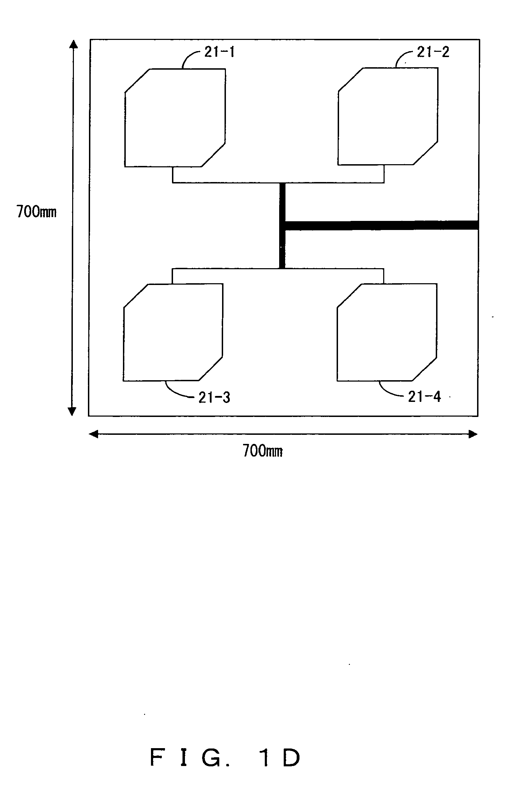

Fig. 1D shows an example of the above narrow beam antenna. This beam antenna comprises four antenna elements 21-1 to 21-4 arrayed at a prescribed interval, and has an area of 700 square millimeters, which is problematic because the device has to be large.

The method of locating a position of an RFID tag described in the Patent Document 2 can not be used to detect attachment omissions of and failures of the RFID tag because a light reflector is used which operates not in association with an RFID circuit. Further, it is necessary to provide a light emitting element on the side of the reader/writer.

It is therefore desirable to locate a position of an RFID tag with a relatively small device in an RFID system.

It is further desirable to detect attachment omissions of the RFID tag and failures of the RFID tag attached to an item in an RFID system.

A position locator according to the present invention comprises an antenna, a control device and an output device, and locates a position of a radio tag in which data can be read and written in a contactless manner. The antenna has directionality, and receives a harmonic signal generated from the radio tag. The control device controls directions to which the antenna is directed. The output device outputs position information corresponding to a particular direction, and reception information indicating whether or not a harmonic signal was received from that direction, for each of the directions to which the antenna is directed.

A first radio tag embodying the present invention comprises a receiving device, a harmonic wave generation device and a transmitting device. The receiving device receives an unmodulated continuous wave as an interrogation signal from a reader/writer. The harmonic wave generation device generates a harmonic signal from the received continuous wave. The transmitting device transmits a response signal corresponding to the interrogation signal and the harmonic signal.

A second radio tag embodying the present invention comprises a receiving device, a light emitting device and a transmitting device. The receiving device receives an unmodulated continuous wave as an interrogation signal from the reader/writer. The light emitting device generates light from the received continuous wave. The transmitting device transmits the response signal corresponding to the interrogation signal.

Reference is made, by way of example only, to the accompanying drawings in which:

Fig. 1A    shows a configuration of a conventional RFID system;
Fig. 1B    shows a circuit equivalent to an RFID tag;
Fig. 1C    shows a re-radiation power of an antenna of the RFID tag;
Fig. 1D    shows a beam antenna of a bandwidth of 935MHz;
Fig. 2      shows a principle of a position locator according to the present invention;
Fig. 3      shows a configuration of a first RFID tag;
Fig. 4      shows harmonic waves;
Fig. 5A    shows a first waveform of an antenna;
Fig. 5B    shows a second waveform of the antenna;
Fig. 6      shows a configuration of a first position locator system;
Fig. 7      shows a first receiving antenna;
Fig. 8      shows a configuration of a second position locator system;
Fig. 9      shows a second receiving antenna;
Fig. 10    shows a configuration of a second RFID tag;
Fig. 11    shows a configuration of a third RFID tag;
Fig. 12    shows a configuration of a fourth RFID tag; and
Fig. 13    shows a configuration of a third position locator system.

Hereinafter, the preferred embodiments of the present invention will be explained in detail by referring to the drawings.

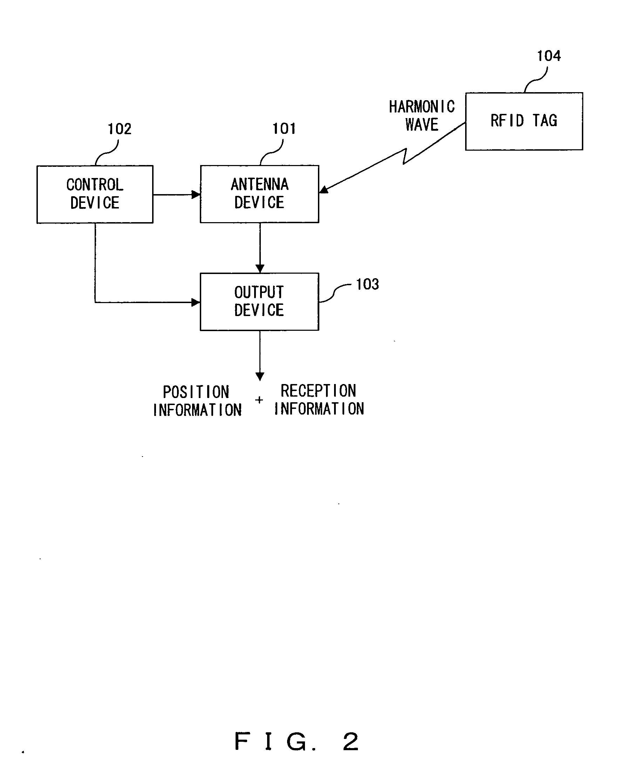

Fig. 2 shows a principle of a position locator according to the present invention. This position locator comprises an antenna device 101, a control device 102 and an output device 103, and locates a position of an RFID tag 104 in which data can be read and written in a contactless manner.

The antenna device 101 has directionality, and receives a harmonic signal generated from the RFID tag 104. The control device 102 controls the directions to which the antenna device 101 is directed. For each of the directions to which the antenna device 101 is directed, the output device 103 outputs position information corresponding to that direction, and reception information indicating whether or not the harmonic wave from that direction was received.

The RFID tag 104 generates the harmonic wave having the frequency equal to the integral multiple of the frequency at which the RFID tag 104 received the continuous wave from the reader/writer. The antenna device 101 changes the directionality in accordance with the instruction made by the control device 102, receives the harmonic signal transmitted from the direction to which the antenna was directed, and provides, to the output device 103, information indicating whether or not the antenna device 101 received the harmonic signal. The control device 102 provides, to the output device 103, information indicating the direction which the control device 102 instructed the antenna device 101 to be directed to.

Based on the information provided by the antenna device 101 and the control device 102, the output device 103 outputs the position information specified by (arranged in order of) each direction, and the reception information indicating whether or not the harmonic signal from the direction was received.

Thereby, it is possible to obtain information of whether or not there exists an RFID tag 104 generating the harmonic signal, over a range of angles (a plurality of positions) to which the antenna device 101 is directed.

Further, if the RFID tag 104 generates light instead of the harmonic signal, it is possible to locate the position of the RFID tag 104 by detecting the light and displaying an image based on the light.

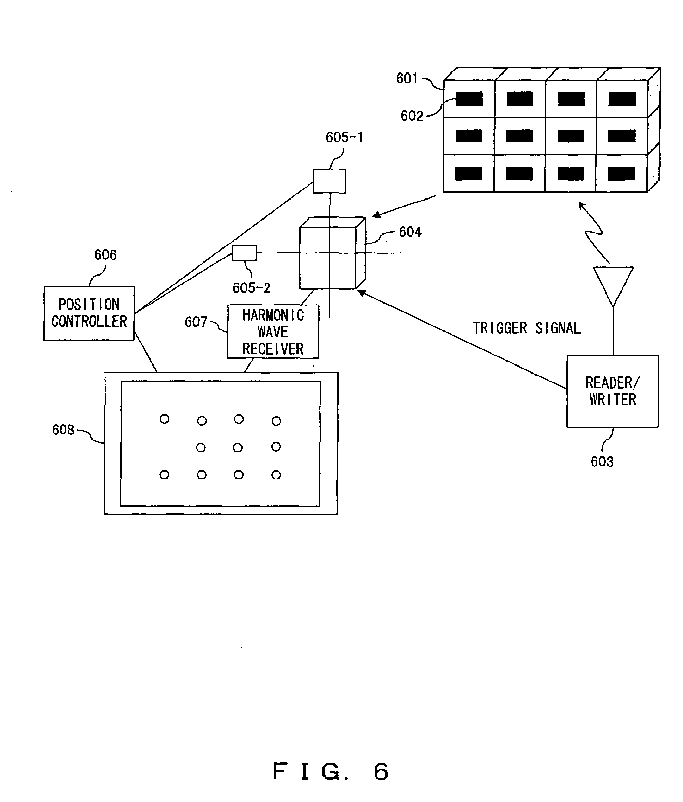

For example, in Fig. 6 about which explanations will be given, the antenna device 101 corresponds to a harmonic wave receiving antenna 604 and to a harmonic wave receiver 607, and the control device 102 and the output device 103 correspond respectively to a position controller 606 and to a monitor device 608.

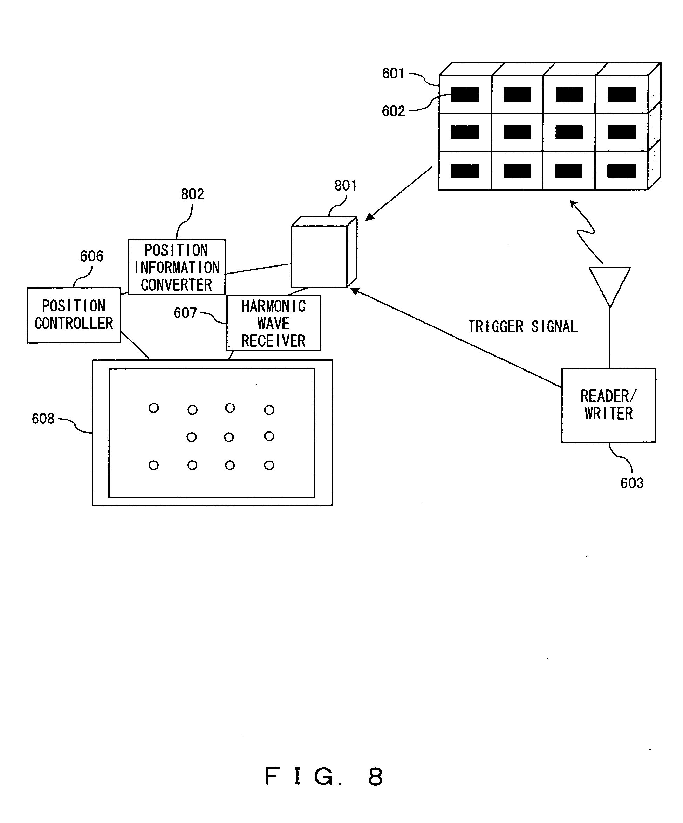

In Fig. 8 about which explanations will be given, the antenna device 101 corresponds to a harmonic wave receiving antenna 801 and to a harmonic wave receiver 607, and the control device 102 and the output device 103 correspond respectively to the position controller 606 and to the monitor device 608.

Because a harmonic wave has a frequency which is equal to or higher than twice the frequency of a fundamental wave, the wavelength of the harmonic wave is equal to or shorter than a half of the frequency of the fundamental wave. Accordingly, the intervals between the antenna elements required for securing the directionality of the receiving antenna are reduced, which makes it possible to locate a position of an RFID tag by a small receiving antenna. If the RFID tag generating light instead of the harmonic signal is used, the receiving antenna can be dispensed with, which allows an even smaller device.

In both cases, it is possible to detect attachment omissions of and failures of the RFID tag because the RFID tag makes a response when receiving the continuous wave from the reader/writer.

In the RFID system according to the present embodiment, the RFID tag is provided with a circuit which generates the harmonic wave of a high frequency signal received, or with a circuit which generates light, and the position of the RFID tag (or more correctly its direction relative to an antenna) is located by utilizing the harmonic wave or the light generated from the RFID tag. By arranging a plurality of items bearing RFID tags at a certain distance from the antenna, as shown in Fig. 6, detection of the direction of an RFID tag effectively locates the position of the item.

As the element for generating the harmonic wave, a non-linear element such as a diode, a transistor or the like is used. As the element for generating the light, a light emitting element such as a light emitting diode or the like is used. In the embodiments below, a diode is used as the non-linear element, and a light emitting diode is used as the light emitting element.

When the harmonic wave is utilized, for example, the signal having the wavelength shorter than the wavelength used for the transmission/reception of the interrogation signal and the response signal between the reader/writer and the tag is to be received. Accordingly, the intervals between the antenna elements required for receiving narrow beams can be reduced, such that it is possible to locate the position of the tag by a relatively small receiving antenna. In the above Patent Document 1, a harmonic wave is used for preventing communication interference, which means that the invention of the Patent Document 1 and the present invention are different from each other in the purpose of using the harmonic wave.

When the light is utilized, it is possible to locate the position of the tag by using a light detector such as a CCD (Charge Coupled Device) or the like.

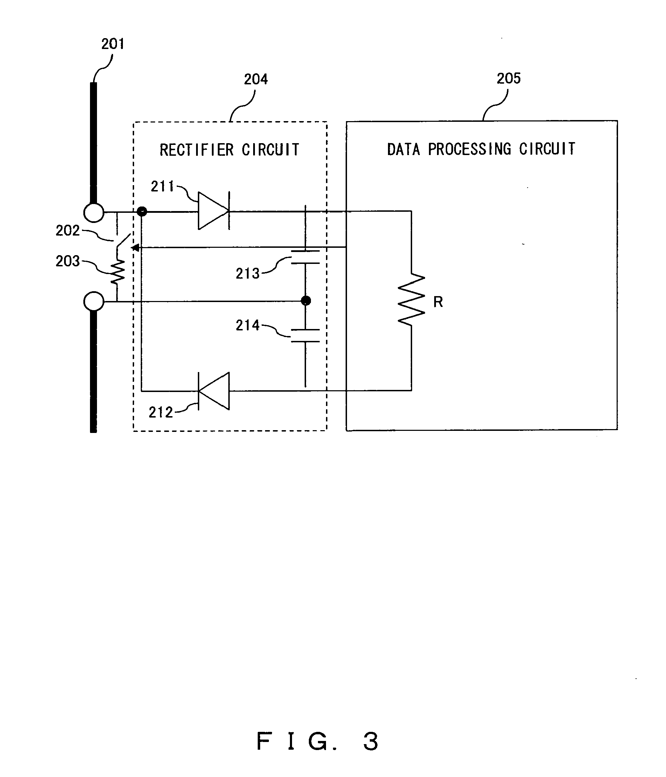

Fig. 3 shows an example in which a rectifier circuit of the RFID tag is used as a harmonic wave generation circuit. This RFID tag comprises a dipole antenna 201, a switch 202, a resistor 203, a rectifier circuit 204 and a data processing circuit 205, and the rectifier circuit 204 includes diodes 211 and 212 and capacitors 213 and 214. The data processing circuit 205 includes a memory circuit and a logic circuit, and the load resistance of the data processing circuit 205 is expressed equivalently by R.

The switch 202 and the resistor 203 form a variable load circuit. The data processing circuit 205 varies the load of the tag by turning on/off the switch 202 by a modulated signal, and creates the response signal. Then, the dipole antenna 201 returns the response signal to the reader/writer at the frequency at which the corresponding interrogation signal was received from the reader/writer.

In a general rectifier circuit, generation of the harmonic wave is prevented by providing two diodes which are equal to each other in characteristics and in sizes. To the contrary, in the present embodiment, a harmonic wave at a level which does not affect other radio systems are generated by changing these characteristics or by providing two diodes different in size.

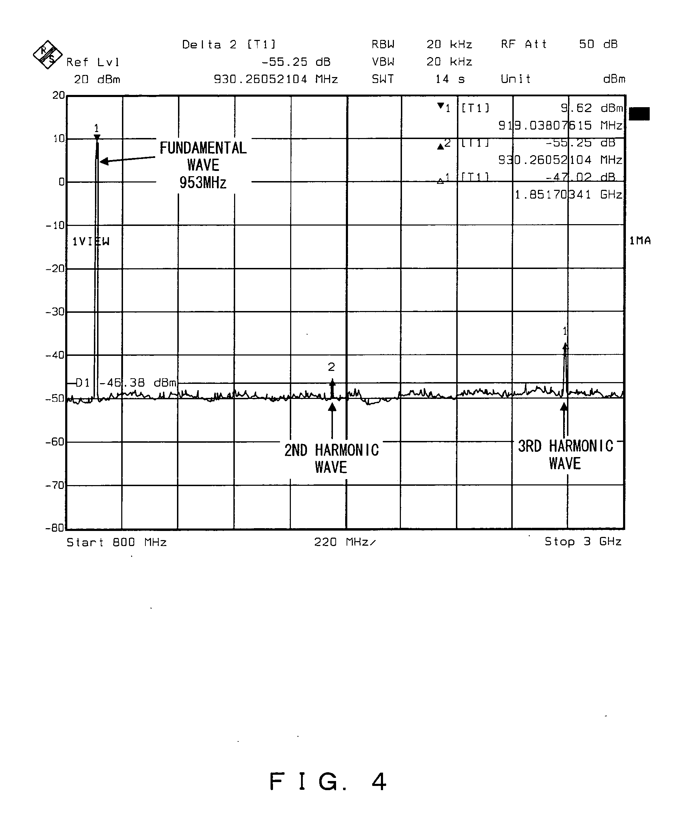

Fig. 4 shows an example of the harmonic waves generated in the rectifier circuit 204 of Fig. 3. In this example, the second harmonic wave and the third harmonic wave are generated which respectively have the frequency two times higher than and the frequency three times higher than the frequency (953MHz) of the fundamental wave. For example, when the third harmonic wave is used for the position location, the receiving antenna of a shape as shown in Fig. 1D can be reduced to one-third in size.

Here, preferred sizes and characteristics of the diodes 211 and 212 will be explained. In order to prevent the harmonic waves from affecting other radio systems, a signal is to be generated, which is of power of about sixty decibels lower than that of the fundamental wave, generally.

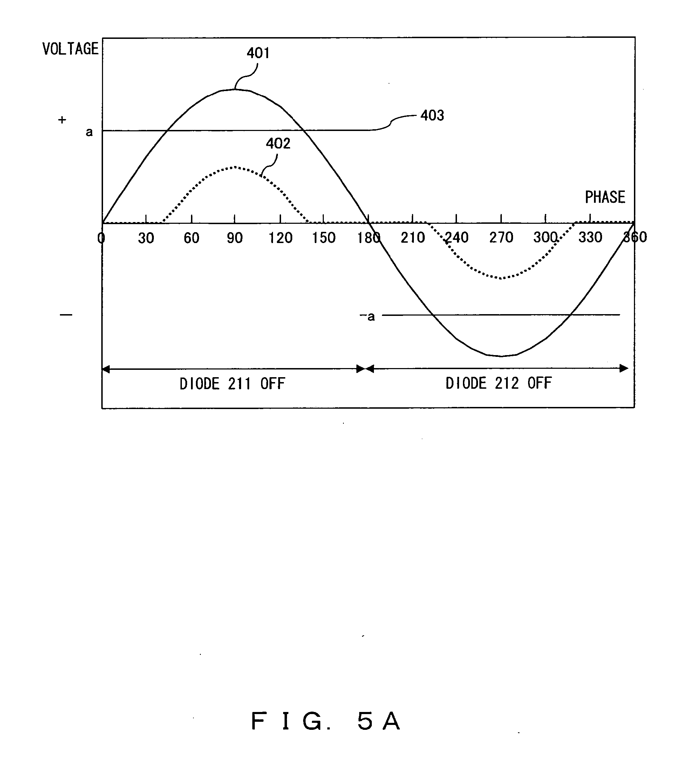

Fig. 5A shows an example of waveforms of an antenna when the antenna generates odd harmonic waves. The horizontal axis represents the phase, and the vertical axis represents the voltage generated in the antenna. Generally, a threshold value voltage 403 at which the diodes 211 and 212 are turned on is set to about 0V in order to enhance a conversion efficiency of the rectifier circuit 204. Thereby, waves having the voltage waveform similar to a received waveform 401 are re-radiated from the antenna 201, accordingly, harmonic waves are hardly generated at all.

When the threshold vale voltage 403 is set to "a" in order to generate a harmonic wave, the component including the harmonic wave generated by the rectifier circuit 204 corresponds to a voltage waveform 402. When the antenna 201 and the circuit match, the signal voltages re-radiated by the antenna 201 is expressed by the formulas below.

Fundamental wave

$$(4/\pi)\ (a \cdot \sin\theta - (1/2) \cdot \sin 2\theta)$$

nth harmonic wave component (n is an odd number)

$$(4/\pi)\ ((a/n) \cdot \sin(n\theta) - (1/(n+1)) \cdot \sin\ ((n+1)\theta) +$$
$$(1/(n-1)) \cdot \sin\ ((n-1)\ \theta))$$

where the amplitude of the original waveform is 1, the phases at which the signal value in the original waveform becomes "a" are $\pi/2-\theta$ and $\pi/2+\theta$, and the phases at which the signal value becomes "-a" are $3\pi/2-\theta$ and $3\pi/2+\theta$. In the above, $\theta$ is obtained as the function of "a". Accordingly, it is possible to generate the appropriate harmonic wave, by determining "a" so that the power ratio of the fundamental wave to the nth harmonic wave is -60dB based on the above formulas.

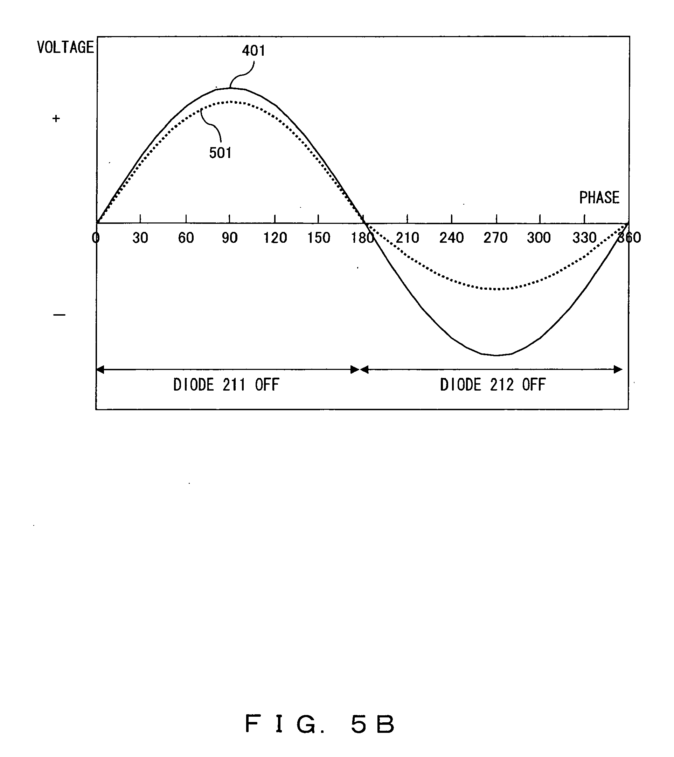

Fig. 5B shows an example of waveforms of an antenna when the antenna generates even harmonic waves. Generally, the sizes of the diodes 211 and 212 are set to be the same in order to prevent the generation of harmonic waves. When the sizes of these diodes are different from each other, the waveform of the high frequency signal re-radiated from the antenna 201 is a voltage waveform 501, and the magnitudes of the amplitudes of the positive voltage side and of the negative voltage side are the same.

Here, if the amplitude of the higher half period is 1, and the amplitude of the lower half period is "b" (b < 1), the signal voltages re-radiated by the antenna 201 are expressed by the formulas below when the antenna 201 and the circuit match.

Fundamental wave

$$(1+b)\ /\ 2$$

nth harmonic wave component (n is an even number)

$$2(1-b)\ /\ (\pi(n^2-1))$$

Accordingly, it is possible to generate the appropriate harmonic wave, by determining "b" so that the power ratio of the fundamental wave to the nth harmonic wave is -60dB based on the above formulas and by using the determined "b" as the size ratio of the two diodes.

Further, it is desirable that the values of "a" and of "b" are determined also taking the frequency characteristic of the antenna 201 into consideration. In a harmonic wave, radiation impedance of an antenna is about ten times higher than that in a fundamental wave, and an antenna gain is about 1.5 times higher than that in the fundamental wave. Taking these characteristics into consideration, the harmonic signal of -60dB is to be set to have the difference of about -40dB regarding a circuit.

For example, when the 2nd to the 5th harmonic waves are used for the position location, the preferable values of "a" and of "b" are as described below.

3rd harmonic wave

a ≥ 0.025 (threshold value voltage is equal to or higher than 2.5% of voltage amplitude generated in antenna)

5th harmonic wave

a ≥ 0.004 (threshold value voltage is equal to or higher than 4% of voltage amplitude generated in antenna)

2nd harmonic wave

a ≤ 0.98 (two diodes different at least 2% in size are used)

4th harmonic wave

a ≤ 0.895 (two diodes different at least 10.5% in size are used)

Fig. 6 shows an example of a configuration of a position locator system using the high frequency signal generated from the RFID tag as described above. This system comprises RFID tags 602 which are attached to a large number of items 601 such as corrugated boxes or the like, a reader/writer 603, a harmonic wave receiving antenna 604, rotation control mechanisms 605-1 and 605-2, a position controller 606, a harmonic wave receiver 607 and a monitor device 608.

The reader/writer 603 transmits an unmodulated continuous wave to the RFID tag 602 as an interrogation signal, and also transmits a trigger signal to the harmonic wave receiving antenna 604. The RFID tag 602 outputs a response signal in a fundamental wave having the frequency same as that of the received wave, and also outputs the harmonic signal of the fundamental wave. The reader/writer 603 receives the response signal in the fundamental wave, and the harmonic wave receiving antenna 604 is activated by the trigger signal, and receives the harmonic signal.

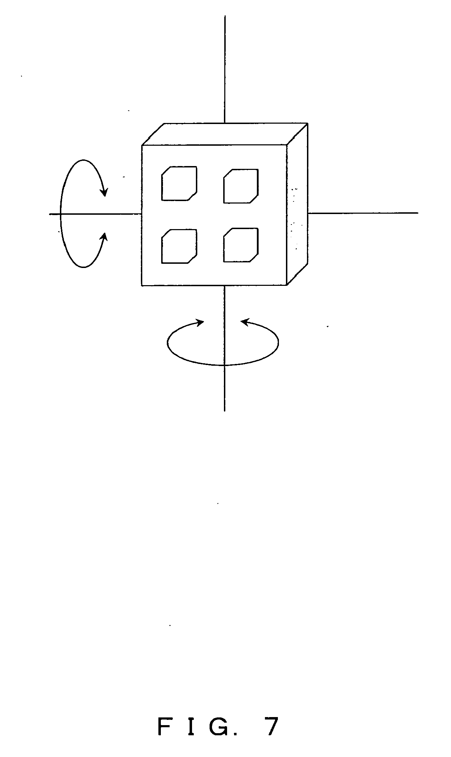

As, shown in Fig. 7, the harmonic wave receiving antenna 604 comprises a plurality of antenna elements arrayed on a plane at a prescribed interval, and two rotation axes. As the antenna elements, patch antennas are used, for example, and the array interval thereof is about the same as the wavelength of the harmonic wave to be received for example. The rotation control mechanisms 605-1 and 605-2 cause the harmonic wave receiving antenna 604 to rotate about the respective axes in accordance with a control signal from the position controller 606, which indicates position information. Thereby, the beams of the harmonic wave receiving antenna 604 can be directed mechanically across a wide scope (range of directions).

The position controller 606 outputs, to the monitor device 608, the signal that indicates the current direction of the beam of the harmonic wave receiving antenna 604. The harmonic wave receiver 607 receives the signal from the harmonic wave receiving antenna 604, and outputs, to the monitor device 608, the signal indicating whether or not a prescribed harmonic wave was received. Then, the monitor device 608 estimates that the direction indicated by the signal from the position controller 606 is the direction in which there is the RFID tag 602, and converts the direction into the position coordinate on the display plane, and thereafter, displays, on the screen, the information indicating whether or not the harmonic waves were received from the respective positions.

This information may be displayed in a text format or the like, although it is desirable that this information is displayed in an image format as shown in Fig. 6. An operator can recognize the positions of the respective RFID tags 602 from the information displayed on the monitor device 608. In this case, on the positions of the item 601 to which the RFID tag 602 is not attached or of the item 601 to which the RFID tag with a failure is attached, the information indicating the reception of the harmonic wave is not displayed, thereby, it is also possible to detect the attachment omissions and the failures of the RFID tag 602.

In addition to the method in which the beams are directed mechanically, it is also possible to locate a position of a tag by a method in which phases of a plurality of antenna elements are changed electrically. Fig. 8 shows an example of a configuration of this type of the position locator system. This system has a configuration of Fig. 6 in which the harmonic wave receiving antenna 604 and the rotation control mechanisms 605-1/605-2 are respectively replaced with the harmonic wave receiving antenna 801 and a position information converter 802. The RFID tag 602, the reader/writer 603, the position controller 606, the harmonic wave receiver 607 and the monitor device 608 operate similarly to those of Fig. 6.

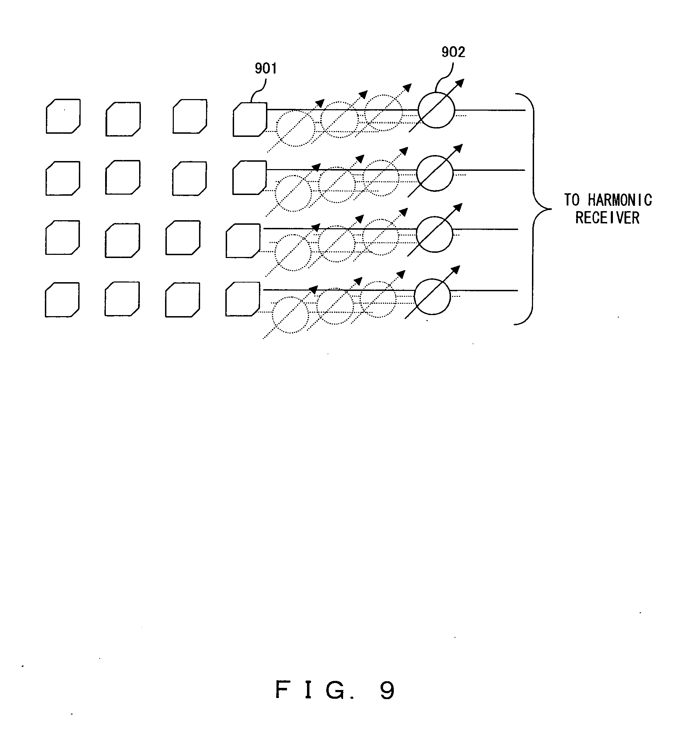

The harmonic wave receiving antenna 801 is a phased array beam antenna as shown in Fig. 9, and comprises a large number of antenna elements 901 arrayed on a plane at a prescribed interval, and comprises as many variable phase shifters 902 as the antenna elements 901, which are connected respectively to the antenna elements 901. This harmonic wave receiving antenna 801 is activated by a trigger signal from the reader/writer 603, and receives a harmonic signal.

As each antenna element 901, a patch antenna is used for example, and the array interval thereof is about the same as the wavelength of the harmonic wave to be received for example. The phase difference of the variable phase shifter 902 varies in accordance with the control signal from the position information converter 802. Each variable phase shifter 902 outputs, to the harmonic wave receiver 607, the signal output from corresponding antenna element 901 after varying the phase of the signal by the phase difference in accordance with the corresponding control signal.

The position information converter 802 converts the control signal from the position controller 606 which indicates the position information, into the control signal indicating the phase difference of each variable phase shifter 902, and outputs the converted signal to the harmonic wave receiving antenna 801.

The harmonic wave receiver 607 can detect only the signal that was received from a particular direction by using the signal output from the variable phase shifter 902. For example, if the phase differences of all the variable phase shifters 902 are set to zero, only the harmonic waves coming from right in the front of the antenna are detected, and the harmonic waves coming from the other directions are not detected. It is also possible to arbitrarily change the directions of the harmonic waves which are to be detected by employing different values as the respective phase differences.

The position controller 606 outputs, to the monitor device 608, the signal indicating the current direction of the beam of the harmonic wave receiving antenna 801. The harmonic wave receiver 607 outputs, to the monitor device 608, the signal indicating whether or not a prescribed harmonic wave was received. Thereby, the information indicating whether or not the harmonic waves were received from the respective positions are displayed on the screen of the monitor device 608 similarly as in Fig. 6.

In the RFID system of Fig. 8, the configuration of the harmonic wave receiving antenna 801 is more complicated than that of Fig. 6, however, the RFID system of Fig. 8 has the advantages of processing at a higher speed and of reduced failures because it does not require mechanical operations.

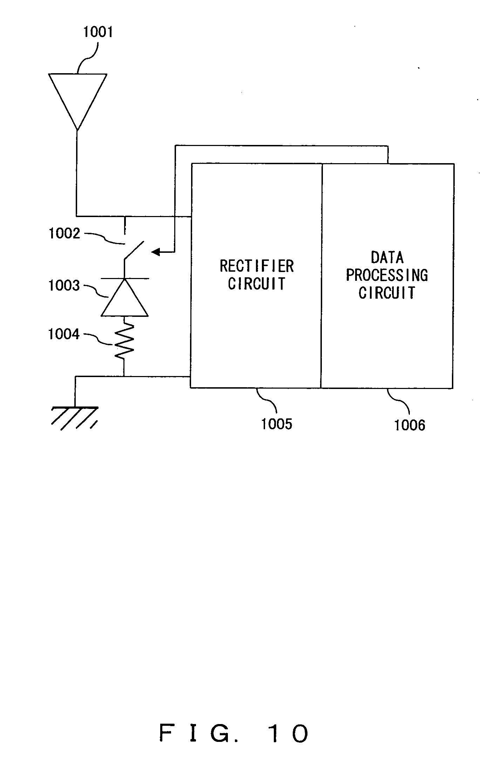

In the RFID tag of Fig. 3, the rectifier circuit 204 is used to generate the harmonic wave, however, it is possible to use other circuits for this purpose. Fig. 10 shows an example of using the variable load circuit of the RFID tag as the harmonic wave generation circuit.

This RFID tag comprises an antenna 1001, a switch 1002, a diode 1003, a resistor 1004, a rectifier circuit 1005 and a data processing circuit 1006. Among them, the antenna 1001, the switch 1002, the resistor 1004 and the data processing circuit 1006 operate similarly to the dipole antenna 201, the switch 202, the resistor 203 and the data processing circuit 205 of Fig. 3. The rectifier circuit 1005 corresponds to a common rectifier circuit which does not generate a harmonic wave.

By interposing the diode 1003 in the variable load circuit in series as in Fig. 10, it is possible to generate the harmonic wave based on the non-linear characteristic of the diode 1003 when the switch 1002 is in the "on" state, i.e., upon the transmission of the logic "1". Also in this case, the position of the RFID tag is located by the system of Fig. 6 or Fig. 8.

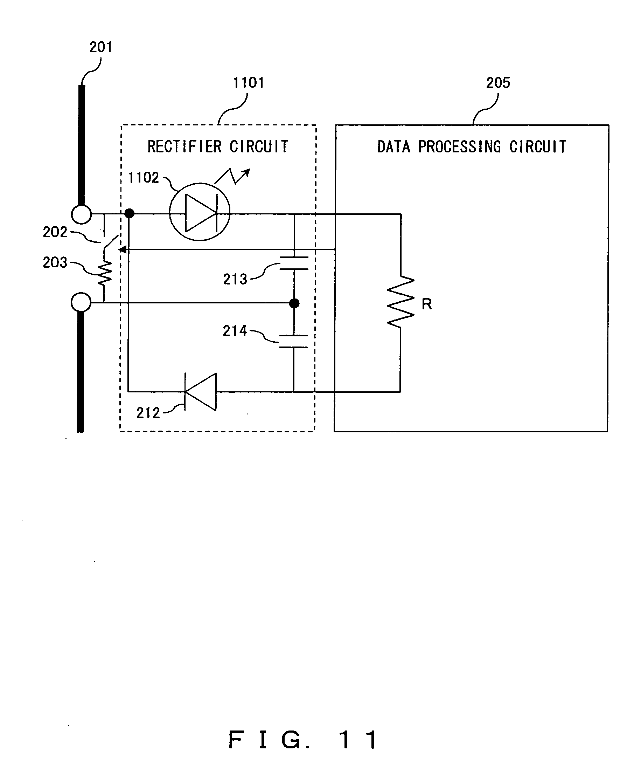

Next, an example will be explained, in which a light emitting circuit is provided to the RFID tag, by referring to Fig. 11 to Fig. 13.

Fig. 11 shows an example of using the rectifier circuit of the RFID tag as a light emitting circuit. This RFID tag has a configuration of Fig. 3 in which the rectifier circuit 204 is replaced with a rectifier circuit 1101, and the rectifier circuit 1101 has a configuration of the rectifier circuit 204 of Fig. 3 in which the diode 211 is replaced with a light emitting diode 1102 which emits infrared rays or visible light. Thereby, the light emitting diode emits light when the rectifier circuit 1101 operates.

Additionally, even when the diode 212 instead of the diode 211 of the rectifier circuit 204 is replaced with the light emitting diode, the same effect can be achieved.

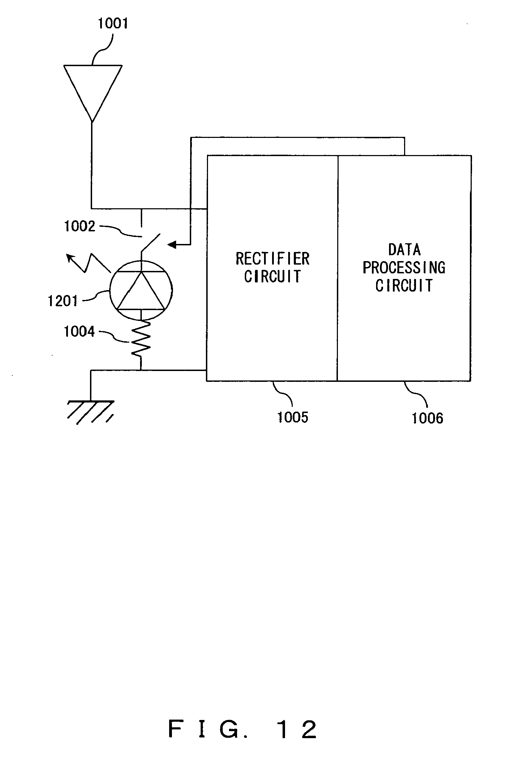

Fig. 12 shows an example of using the variable load circuit of the RFID tag as the light emitting circuit. This RFID tag has a configuration of Fig. 10 in which the diode 1003 is replaced with a light emitting diode 1201. Thereby, the light emitting diode 1201 emits light upon the transmission of the logic "1".

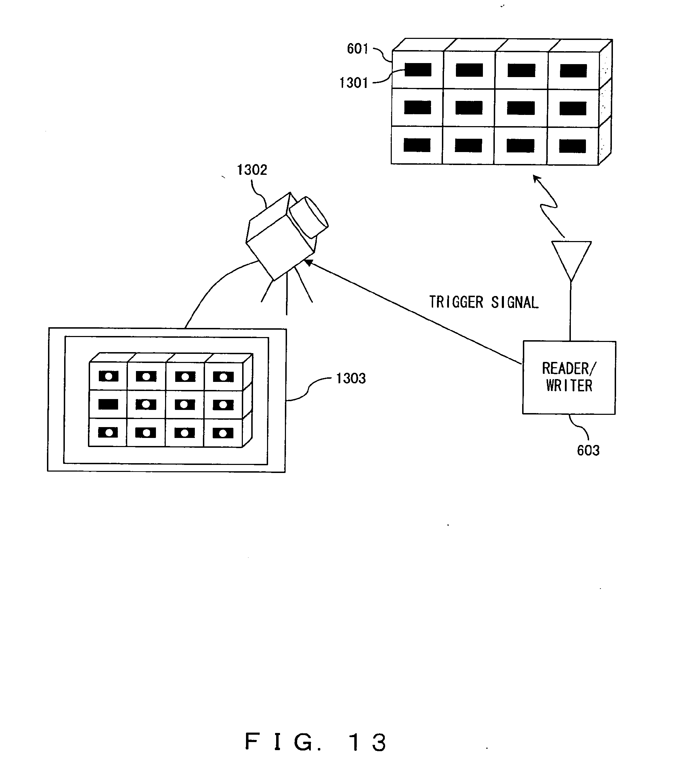

Fig. 13 shows an example of a configuration of a position locator system using the light generated from the RFID tag as described above. This system comprises RFID tags 1301 which are attached to a large number of items 601, the reader/writer 603, a camera 1302 and a monitor device 1303. Among them, the reader/writer operates similarly to that of Fig. 6.

The RFID tag 1301 outputs the response signal to the reader/writer 603, and also generates light. The camera 1302 comprises a light detector such as a CCD or the like for conducting a photoelectric conversion, is activated by the trigger signal from the reader/writer 603, takes the image of the item 601, and outputs the image information to the monitor device 1303. The monitor device 1303 displays the received image information on the screen.

An operator can recognize the positions of the RFID tags 1301 making a response, from the positions of the lighting points displayed on the monitor display 1303. In this case, on the positions of the item 601 to which the RFID tag 1301 is not attached or of the item 601 to which the RFID tag 1301 with a failure is attached, the light point is not displayed, thereby, it is also possible to detect the attachment omissions and the failures of the RFID tag 1301.

EP 1 795 915 A2

**Claims**

1. A position locator for locating a position of a radio tag (104, 602) in which data can be read and written in a contactless manner, comprising:

   an antenna device (101, 604, 607, 801) having a directionality, for receiving a harmonic signal generated from the radio tag;
   a control device (102, 606) for controlling a direction to which the antenna device is directed; and
   an outputting device (103, 608) for outputting position information corresponding to a direction, and reception information indicating whether or not the harmonic wave from the direction was received, regarding each of the directions to which the antenna device is directed.

2. The position locator according to claim 1, further comprising:

   a rotation control device (104, 605) for causing the antenna device to rotate about a rotation axis in accordance with a control signal from the control device, wherein:
   the antenna device includes a plurality of antenna elements arrayed at a prescribed interval.

3. The position locator according to claim 1, further comprising:

   a conversion device (802) for converting a control signal from the control device into a phase control signal, wherein:
   the antenna device includes a plurality of antenna elements arrayed at a prescribed interval and a plurality of variable phase shifters for varying phases of signals output from the respective antenna elements in accordance with the phase control signal.

4. A radio tag (104, 602), comprising:

   a receiving device (201, 1001) for receiving an unmodulated continuous wave as an interrogation signal from a reader/writer;
   a harmonic wave generation device (204, 1002, 1003, 1004) for generating a harmonic signal from the received continuous wave; and
   a transmitting device (201, 1001) for transmitting a response signal corresponding to the interrogation signal and the harmonic signal.

5. The radio tag according to claim 4, wherein:

   the harmonic wave generation device includes a non-linear element (211, 212), and includes a rectifier device (211, 212, 213, 214) for generating a power voltage from the received continuous wave.

6. The radio tag according to claim 5, wherein:

   the rectifier device includes two diodes (211, 212) having a threshold value voltage which is equal to or higher than a prescribed value, as the non-linear elements.

7. The radio tag according to claim 6, wherein:

   the threshold value voltage is equal to or higher than 2.5% of voltage amplitude of the received continuous wave.

8. The radio tag according to claim 5, wherein:

   the rectifier device includes two diodes (211, 212) which are different from each other in size, as the non-linear elements.

9. The radio tag according to claim 8, wherein:

   a size of one of the two diodes is equal to or smaller than 89.5% of the other one.

**10.** The radio tag according to claim 4, wherein:

the harmonic wave generation device includes a non-linear element (1003), and includes a variable load device (1002, 1003, 1004) for generating the response signal.

**11.** A radio tag (1301), comprising:

a receiving device (201, 1001) for receiving an unmodulated continuous wave as an interrogation signal from a reader/writer;
a light emitting device (1101, 1002, 1004, 1201) for generating light from the received continuous wave; and
a transmitting device (201, 1001) for transmitting a response signal corresponding to the interrogation signal.

**12.** The radio tag according to claim 11, wherein:

the light emitting device includes a light emitting element (1102), and includes a rectifier device (212, 213, 214, 1102) for generating a power voltage from the received continuous wave.

**13.** The radio tag according to claim 11, wherein:

the light emitting device includes a light emitting element (1201), and includes a variable load device (1002, 1004, 1201) for generating the response signal.

INTERROGATION
SIGNAL

RESPONSE
SIGNAL

12

READER/
WRITER

11

13

14

RECTIFIER
CIRCUIT

DATA
PROCESSING
CIRCUIT

15

16

F I G. 1 A

F I G. 1 B

RE-RADIATION POWER OF ANTENNA $(V^2/Rabt=1)$

F I G. 1 C

F I G. 1 D

104

HARMONIC
WAVE

RFID TAG

102

CONTROL
DEVICE

101

ANTENNA
DEVICE

OUTPUT
DEVICE

103

POSITION
INFORMATION
+
RECEPTION
INFORMATION

F I G. 2

201

204

205

RECTIFIER CIRCUIT

DATA PROCESSING CIRCUIT

211

202

203

213

214

212

R

F I G. 3

| | Delta 2 [T1] | | RBW | 20 kHz | RF Att | 50 dB |
|---|---|---|---|---|---|---|
| Ref Lvl | | -55.25 dB | VBW | 20 kHz | | |
| 20 dBm | | 930.26052104 MHz | SWT | 14 s | Unit | dBm |

FUNDAMENTAL WAVE 953MHz

2ND HARMONIC WAVE

3RD HARMONIC WAVE

▼1 [T1]        9.62 dBm
           919.03807615 MHz
▲2 [T1]        -55.25 dB
           930.26052104 MHz
△1 [T1]        -47.02 dB
           1.85170341 GHz

1VIEW
1MA
D1 -46.38 dBm

Start 800 MHz          220 MHz/          Stop 3 GHz

F I G. 4

F I G.  5 A

F I G. 5 B

601
602

605-1

606

POSITION
CONTROLLER

605-2

607

HARMONIC
WAVE
RECEIVER

604

TRIGGER SIGNAL

READER/
WRITER

603

608

○ ○ ○ ○
○ ○ ○
○ ○ ○ ○

F I G.  6

F I G. 7

FIG. 8

901

902

TO HARMONIC
RECEIVER

F I G. 9

1001

1002

1003

1004

RECTIFIER
CIRCUIT

DATA
PROCESSING
CIRCUIT

1005

1006

F I G. 1 0

201

1101

205

RECTIFIER CIRCUIT

DATA PROCESSING CIRCUIT

1102

202

203

213

R

214

212

F I G.   1 1

F I G. 1 2

F I G. 1 3

**REFERENCES CITED IN THE DESCRIPTION**

**Patent documents cited in the description**

- JP 8227468 A
- JP 4089296 A